# EUROPÄISCHE PATENTANMELDUNG

(11) **EP 0 687 836 A1**
(43) Veröffentlichungstag der Anmeldung: **20.12.1995**
(21) Anmeldenummer: 95107658.7
(22) Anmeldetag: 19.05.1995
(51) Int. Cl.: F16H 57/02, F16D 3/18

(54) **Getriebeeinheit für Handhabungsgeräte**

(30) Priorität: 14.06.1994 DE 4420531
(71) Anmelder: SEW-EURODRIVE GMBH & CO., D-76646 Bruchsal (DE)
(72) Erfinder: Kimmich, Bernd, Porto Alegra RS (BR); Sander, Joachim, D-76698 Ubstadt-Weiher (DE)
(74) Vertreter: Lempert, Jost, Dipl.-Phys. Dr. rer.nat.

(57) **Zusammenfassung**

Zur Vermeidung der Ausübung nachteiliger Kippmomente auf ein mit der Abtriebswelle eines Antriebsmotors insbesondere selbstzentrierend zu verbindendes Getriebeelement sieht die Erfindung eine Getriebeeinheit für Handhabungsgeräte, wie Roboter oder dergleichen, mit einem Getriebeelement, mit einem antriebsseitigen Verbindungselement zur Verbindung mit der Abtriebsachse eines Motors und mit mindestens einem Lager vor, bei der mit dem Getriebeelement (1, 4, 6) bzw. dem Verbindungselement (20) fest verbindbare Kupplungsteile (12, 19) über Innen- und Außenverzahnungen (12a, 10a, 10b, 18) in Drehverbindung stehen und ein Lager (14) für ein Kupplungsteil (10) radial um eine Innen- und Außenverzahnung (10b, 18) angeordnet ist.

## Beschreibung

Die Erfindung betrifft eine Getriebeeinheit für Handhabungsgeräte, wie Roboter oder dergleichen, mit einem Getriebeelement, mit einem antriebsseitigen Verbindungselement zur Verbindung mit der Abtriebsachse eines Motors und mit mindestens einem Lager.

Derartige hochdynamische Getriebe, wie Servogetriebe, dienen zur genauen Positionierung der Handhabungselemente einer Handhabungseinheit. Sie müssen an einen Motor angebaut werden. Aufgrund der genauen Anpassung muß der Zusammenbau von Getriebe und Motor in der Regel beim Getriebehersteller erfolgen. Hierzu sind aufwendige Arbeiten, wie Nachbearbeitungen von Achsen oder Planflächen sowie Justierarbeiten, erforderlich, die von besonders geschulten Fachkräften ausgeführt werden müssen. Es besteht die Möglichkeit, geeignetes Personal im Hause des Getriebeherstellers zu schulen, so daß die Montage des Getriebes auch beim Kunden erfolgen kann. Dies ist jedoch mit erheblichen Nachteilen verbunden, wie der fehlenden Routine des Kundenmitarbeiters. Auch kann das Getriebe nicht vollständig montiert (nicht geschlossen, ohne Ölfüllung) ausgeliefert werden mit der Folge von erheblichen Gewährleistungsansprüchen.

Hinzu kommt, daß von den Kunden beizustellende Motoren, gegebenenfalls auch aus Übersee, zunächst dem Getriebehersteller zugesandt werden müssen. Auch dies ist zeitaufwendig und mit erheblichen Kosten verbunden.

Für andere hinreichend feste und starre Verbindungen gilt im Prinzip das gleiche.

An sich bekannte Balgkupplungen haben eine erhebliche Baulänge, die unerwünscht ist. Paßfederverbindungen haben nicht ausreichende Haltekräfte; die erforderliche Spielfreiheit ist nicht gewährleistet.

Sieht man andere Verbindungen, wie Verzahnungskupplungen, vor, so sind hierfür Lager vorzusehen; aufgrund des Spiels solcher Lager besteht die Gefahr, daß auf das Getriebeelement Kippmomente ausgeübt werden, die zu Taumelbewegungen, Rastmomenten und hiermit verbundenem Verschleiß und Geräuschen führen können.

Der Erfindung liegt die Aufgabe zugrunde, unter Vermeidung der vorgenannten Nachteile eine gattungsgemäße Getriebeeinheit zu schaffen, die bei einfacher und bequemer Verbindbarkeit mit einem Antriebsmotor Beeinträchtigungen des Getriebeelementes ausschließt.

Erfindungsgemäß wird die genannte Aufgabe bei einer Getriebeeinheit der eingangs genannten Art dadurch gelöst, daß mit dem Getriebeelement bzw. dem Verbindungselement fest verbindbare Kupplungsteile über Innen- und Außenverzahnungen in Drehverbindung stehen und daß ein Lager für ein Kupplungsteil radial um eine Innen- und Außenverzahnung angeordnet ist.

Dadurch, daß erfindungsgemäß Getriebeelement und Verbindungselement zur Abtriebsachse des Motors über mit Innen- und Außenverzahnungen verbundene Kupplungselemente in Drehverbindung stehen und ein Lager für ein Kupplungsteil radial um eine der Verzahnungen angeordnet ist, wird einerseits eine einfache und bequeme Verbindbarkeit mit dem Motor sichergestellt, andererseits das Auftreten von Kippmomenten mit den genannten Nachteilen zuverlässig vermieden.

Gemäß einer Weiterbildung ist vorgesehen, daß die Verzahnungen in einem Ölbad angeordnet sind, wobei insbesondere die Verzahnungen mit dem Getriebeelement in einem gemeinsamen Ölbad angeordnet sind. Hierdurch wird Materialfraß, wie er bei den einzusetzenden Verzahnungen, insbesondere Bogenverzahnungen, bei Dauerfettfüllung auftreten kann, zuverlässig ausgeschlossen.

In weiterer Ausbildung ist ein Zwischenkupplungsteil vorgesehen, das einerseits mit dem mit dem Getriebeelement fest verbundenen Kupplungsteil, andererseits mit dem mit dem Verbindungsteil fest verbundenen Kupplungsteil über Innen- und Außenverzahnungen in Drehverbindung steht. Durch diese Ausgestaltung wird eine radial eng bauende Verzahnungskupplung zwischen dem Verbindungsteil zum Motor und dem Getriebeelement geschaffen, so daß der Radius der Verzahnungen etwa so groß ist wie der eines Zentralrades (Sonnenrad) des Getriebeelements und/oder der Radius der Verzahnungen der Kupplungselemente geringer ist als der radiale Abstand der Achsen von mit einem Zentralrad (Sonnenrad) des Getriebeelements zusammenwirkenden Rädern des Getriebeelements.

Weitere bevorzugte Ausgestaltungen sehen vor, daß das mit dem Verbindungselement verbundene Kupplungsteil mit einer Außenverzahnung versehen ist und insbesondere daß das Zwischenkupplungsteil mit Innenverzahnungen versehen ist. Das mit der Verzahnung versehene, mit dem Verbindungsteil fest verbundene Kupplungsteil kann einstückig mit dem Verbindungsteil ausgebildet sein.

In weiterer äußerst bevorzugter Ausgestaltung ist vorgesehen, daß Außenverzahnungen der Verzahnungen der Kupplungsteile ballig ausgeführt sind.

Durch die erfindungsgemäße Ausgestaltung läßt sich die Verbindung mit der Abtriebswelle des Motors durch einfaches Aufstecken bewirken, wobei eine Selbstzentrierung auf der Abtriebswelle des Motors erfolgt. Soweit Kupplungsteile durch ein Kupplungsgehäuse umgeben sind, so ist dieses lediglich mittels achsparalleler Schrauben am Motorgehäuse festzulegen, wobei die Kupplungsteile dabei gegebenenfalls angulare Versätze in gewissem hinreichenden Umfange aufnehmen können. Das Verdrehspiel der Verzahnungen kann sehr gering gewählt werden.

Die Abdichtung des Innenraums des eigentlichen Getriebes und der Verzahnungen kann mittels Stulpendichtungen, insbesondere Radialwellendichtungen erfolgen. In diesem Falle ist das Getriebe vollständig vorgefertigt und mit Getriebeöl befüllt - einschließlich des Raumes, in dem die Verzahnungen der Kupplungen angeordnet sind -, so daß zur Verbindung des Getriebes mit dem Motor nur noch das Aufstecken und Festziehen der genannten Schrauben erforderlich ist. Dies kann in einfacher und bequemer Weise beim Anwender mit von ihm bezogenen Motoren durchgeführt werden, ohne daß hierzu aufwendige Bearbeitungen und/oder justierende Arbeiten der miteinander zu verbindenden Teile erforderlich sind.

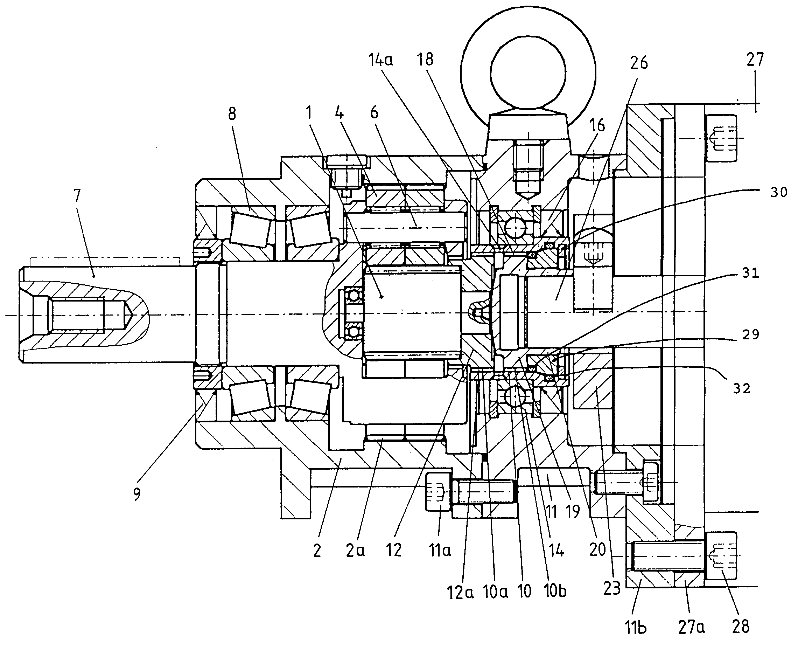

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt die einzige Figur:
ein erfindungsgemäßes Getriebe, angesetzt an die Abtriebswelle eines Motors.

Bei dem in der Figur dargestellten erfindungsgemäßen Getriebe handelt es sich um ein Planetengetriebe. Die koaxialen Zentralräder werden durch das Sonnenrad 1 sowie das mit einer Verzahnung 2a versehene Gehäuse 2 des Getriebes gebildet. Zwischen Sonnenrad 1 und dem Gehäuse 2 befinden sich eine Reihe von Planetenrädern 4 auf mit einem koaxial gelagerten Planetenradträger 5 verbundenen Achsen 6. Die mit der Achse des Sonnenrads 1 fluchtende Achse 7 des Planetenradträgers 5 bildet die Abtriebsachse des Getriebes. Sie ist durch Lager 8 gelagert. Zur Abdichtung des Inneren des Gehäuses 2 zwischen der Welle 7 und der Gehäusewandung sind Dichtungen, wie hier in Form einer Stulpendichtung bzw. Radialwellendichtung 9, vorgesehen.

An der der Abtriebswelle 7 abgewandten Seite des Gehäuses 2 ist mit diesem ein Kupplungsgehäuse 11 über Befestigungsschrauben 11a fest verbunden. Mit dem Sonnenrad 1 ist ein erstes Kupplungsteil 12 fest verbunden, das auf seiner Außenseite eine Außenverzahnung 12a trägt. Das Kupplungsteil 12 ist von einem Kupplungsteil 10 in Form einer Hülse mit Innenverzahnungen 10a, 10b umgeben. Die Innenverzahnung 10a kämmt mit der Außenverzahnung 12a des Kupplungsteils 12. Das Kupplungsteil 10 ist innerhalb des Kupplungsgehäuses 11 über ein Lager 14 gelagert, welches radial über bzw. um die Verzahnung 10b angeordnet ist.

Die Innenverzahnung 10a des Kupplungsteils 10 greift in eine Außenverzahnung 18 eines weiteres Kupplungsteils 19 an einem Verbindungsteil 20, welches zur Verbindung der Getriebeeinheit mit der Abtriebswelle 26 eines Motors 27 drehfest verbunden ist.

Hierzu ist das Verbindungsteil 20 als geschlitzte Hülse ausgebildet, die mittels einer kraftschlüssigen Kupplung (b), die als Spannring 23 ausgeführt ist, auf der Abtriebswelle 26 festspannbar ist.

Das Kupplungsgehäuse 11 wird im Bereich von Radialflanschen 11b mittels Schrauben 28 an entsprechenden Flanschen 27a des Motorgehäuses festgelegt.

Die mit Außenverzahnungen 12a, 18 versehenen Kupplungsteile 12, 19 der Kupplung sind ballig ausgebildet. Hierdurch ist ein angularer Versatz der Teile 12, 19 relativ zum hülsenartigen Kupplungsteil 10 und damit auch zueinander möglich.

Das Lager 14 steht über Bohrungen 14a in Fluidverbindung mit dem das Planetengetriebe 1, 6, 4 umgebenden Inneren des Gehäuses 2 wird daher genauso wie das Planetengetriebe 1, 4, 6 vom gleichen Öl umspült. Nach außen hin ist es durch einen Dichtring 16 abgedichtet.

Das Zwischenkupplungsteil 10 ist mittels eines Dichtrings 29 und eines Sicherungsringes 30 über einen O-Ring 31 fixiert, wobei diese Ringe auch die Abdichtung zwischen dem Verbindungsteil 20 und dem Zwischenkupplungsteil 10 bewirken.

Dadurch, daß das Lager 14 radial im Bereich der Verzahnungen 12a, 10b, 10a, 18 und genauer radial über der Verzahnung 10a, 18 angeordnet ist, werden keine Kippmomente auf das Planetengetriebe und insbesondere dessen Sonnenrad übertragen, so daß Taumelbewegungen und mit diesen verbundene Rastmomente sowie Verschleiß und Geräusche ausgeschlossen sind. Dadurch, daß auch das Lager 14 im Ölbad des Planetengetriebes angeordnet ist, wird Materialfraß, wie er bei mit Dauerfettfüllungen versehenen Bogenverzahnungen festgestellt werden mußte, vermieden. Aufgrund der erfindungsgemäßen Ausbildung der Kupplungen 10, 12, 19 und der Anordnung derselben im Ölbad können schadlos hohe Flächenpressungen in Kauf genommen werden, wodurch der Radius der Verzahnungen der Kupplungsteile 10, 12, 19 relativ gering gewählt werden kann, so daß die Trägheitsmomente der Kupplungen relativ klein gehalten werden können, was bei den beabsichtigten Einsatzzwecken für Handhabungsgeräte äußerst wichtig ist, da hier ein schnelles Ansprechen erforderlich ist.

Die Verbindung des erfindungsgemäßen Getriebes mit dem Motor 27 kann in einfacher Weise erfolgen. Das vorgefertigte Getriebe wird mit seinem abgedichteten und mit Öl befüllten Gehäuse auf die Abtriebswelle 26 des Motors 27 aufgesetzt und zentriert, indem diese durch den Spannring in das Verbindungsteil 20 eintritt. Anschließend wird der Spannring 23 mittels einer Schraube festgezogen und damit das Verbindungsteil 20 auf der Abtriebswelle 26 verspannt. Wenn nachfolgend das Kupplungsgehäuse am Motorgehäuse über die Flansche 11b, 27a mittels der Schrauben 28 festgelegt wird, kann, wenn keine Planparallelität der Flansche gegeben ist, ein angularer Ausgleich über die ballig ausgebildeten Verzahnungen 10a, 10b des Kupplungsteils 10 erfolgen. Der Anbau des Getriebes am Motor 27 erfolgt also in einfacher Weise durch Aufstecken und Festziehen der entsprechenden Schrauben, ohne daß hier weitere zusätzliche und aufwendige Anpaß- und Bearbeitungsvorgänge erforderlich sind.

## Patentansprüche

1. Getriebeeinheit für Handhabungsgeräte, wie Roboter oder dergleichen, mit einem Getriebeelement (1, 4, 6), mit einem antriebsseitigen Verbindungselement (20) zur Verbindung mit der Abtriebsachse eines Motors und mit mindestens einem Lager (14), dadurch gekennzeichnet, daß mit dem Getriebeelement (1, 4, 6) bzw. dem Verbindungselement (20) fest verbindbare Kupplungsteile (12, 19) über Innen- und Außenverzahnungen (12a, 10a, 10b, 18) in Drehverbindung stehen und daß ein Lager (14) für ein Kupplungsteil (10) radial um eine Innen- und Außenverzahnung (10b, 18) angeordnet ist.

2. Getriebeeinheit nach Anspruch 1, dadurch gekennzeichnet, daß die Verzahnungen (10a, 10b, 12a, 18) in einem Ölbad angeordnet sind.

3. Getriebeeinheit nach Anspruch 2, dadurch gekennzeichnet, daß die Verzahnungen (10a, 10b, 12a, 18) mit dem Getriebeelement (1, 4, 6) in einem gemeinsamen Ölbad angeordnet sind.

4. Getriebeeinheit nach einem der vorangehenden Ansprüche, gekennzeichnet durch ein Zwischenkupplungsteil (10), das einerseits mit dem mit dem Getriebeelement (1, 4, 6) fest verbundenen Kupplungsteil (12), andererseits mit dem mit dem Verbindungsteil (20) fest verbundenen Kupplungsteil (19) über Innen- und Außenverzahnungen (10a, 10b, 12a, 18) in Drehverbindung steht.

5. Getriebeeinheit nach einem der vorangehenden Ansprüche, dadurch gekennzeichnet, daß das mit dem Verbindungselement (20) verbundene Kupplungsteil (19) mit einer Außenverzahnung (18) versehen ist.

6. Getriebeeinheit nach einem der vorangehenden Ansprüche, dadurch gekennzeichnet, daß das Zwischenkupplungsteil (10) mit Innenverzahnungen (10a, 10b) versehen ist.

7. Getriebeeinheit nach einem der vorangehenden Ansprüche, dadurch gekennzeichnet, daß das mit dem Verbindungsteil (20) verbundene Kupplungsteil (19) einstückig mit dem Verbindungsteil (20) ausgebildet ist.

8. Getriebeeinheit nach einem der vorangehenden Ansprüche, dadurch gekennzeichnet, daß Außenverzahnungen (12a, 18) der Verzahnungen (10a, 10b, 12a, 18) der Kupplungsteile (10, 12, 19) ballig ausgeführt sind.

9. Getriebeeinheit nach einem der vorangehenden Ansprüche, dadurch gekennzeichnet, daß das Verbindungsteil (20) durch eine kraft- und/oder formschlüssige Kupplung (b) mit der Abtriebsachse eines Motors verbindbar ist.

10. Getriebeeinheit nach einem der vorangehenden Ansprüche, dadurch gekennzeichnet, daß die durch die Verzahnungen (10a, 10b, 12a, 18) gebildete Kupplung der Kupplungsteile (10, 12, 19) gegenüber dem Getriebeelement (1, 4, 6) selbstzentrierend ist und einen Achsversatz gegenüber der Abtriebsachse (26) eines Motors zuläßt.

11. Getriebeeinheit nach einem der vorangehenden Ansprüche, dadurch gekennzeichnet, daß die Kupplung zwischen einer Motorabtriebswelle und dem Verbindungsteil (20) keinen Achsversatz zuläßt.

12. Vorrichtung nach einem der vorangehenden Ansprüche, dadurch gekennzeichnet, daß die kraftschlüssige Kupplung (b) des Verbindungsteils (20) zur Motorabtriebswelle als Spannring (23) ausgebildet ist.

13. Getriebeeinheit nach einem der vorangehenden Ansprüche, dadurch gekennzeichnet, daß eine Abdichtung des Getriebeelements (1, 4, 6) und gegebenenfalls der Verzahnungen (10a, 10b, 12a, 18) mittels Stulpendichtungen, insbesondere Radialwellendichtungen (9, 16) erfolgt.

14. Getriebeeinheit nach einem der Ansprüche 4 bis 13, dadurch gekennzeichnet, daß das Zwischenkupplungsteil (10) mittels Dichtring (29) und Sicherungsring (30) über den O-Ring (31) axial fixiert ist.

15. Getriebeeinheit nach Anspruch 14, dadurch gekennzeichnet, daß die O-Ringe (30, 31) die Abdichtung zwischen Verbindungsteil (20) und Zwischenkupplungsteil (10) übernehmen.
